# EUROPÄISCHE PATENTSCHRIFT

(11) **EP 1 547 873 B1**
(45) Veröffentlichungstag und Bekanntmachung des Hinweises auf die Patenterteilung: **14.01.2009**
(21) Anmeldenummer: 04022126.9
(22) Anmeldetag: 17.09.2004
(51) Int. Cl.: B60R 21/13

(54) **Überrollschutzsystem für Kraftfahrzeuge mit einem ausfahrbaren Überrollkörper**
Rollover protective system for cars with a movable rolloverbody
système d'arceau de sécurité pour véhicule avec arceau déployable

(30) Priorität: 18.11.2003 DE 10353867
(43) Veröffentlichungstag der Anmeldung: 29.06.2005
(73) Patentinhaber: ISE Automotive GmbH, 51702 Bergneustadt (DE)
(72) Erfinder: Beki, Gürkan, 51766 Engelskirchen (DE); Jesse, Rainer, 51702 Bergneustadt (DE); Tischer, Heiko, 51789 Lindlar (DE)
(74) Vertreter: Fuchs

(56) Entgegenhaltungen:
- EP-A- 1 162 333
- EP-A- 1 443 296
- DE-A1- 19 960 764
- DE-C1- 10 203 710

## Beschreibung

Die Erfindung bezieht sich auf ein Überrollschutzsystem für Kraftfahrzeuge, mit einem verfahrbar in einer fahrzeugfesten Führung gehalterten Überrollkörper, der im Normalzustand gegen die Kraft von mindestens einer vorgespannten Antriebs-Druckfeder durch eine Haltevorrichtung in einer unteren, eingefahrenen Ruhelage haltbar ist, und unter Lösen der Haltevorrichtung durch die Federkraft der Antriebs-Druckfeder in eine verriegelte obere, schützende Stellung bringbar ist, wobei die Haltevorrichtung ein mit dem Überrollkörper verbundenes Halteglied und ein damit in lösbarer mechanischer Wirkverbindung stehendes Auslöseglied an einem fahrzeugfesten, sensorgesteuerten pyrotechnischen Aktuator aufweist.

Derartige Überrollschutzsysteme dienen zum Schutz der Insassen in Kraftfahrzeugen ohne schützendes Dach, typischerweise in Cabriolets oder Sportwagen bei einem Überschlag, da das Fahrzeug über den Überrollkörper abrollen wird.

Es ist dabei bekannt, einen die gesamte Fahrzeugbreite überspannenden, fest installierten Überrollbügel vorzusehen. Bei dieser Lösung wird der erhöhte Luftwiderstand und das Auftreten von Fahrgeräuschen als nachteilig empfunden, abgesehen von der Beeinträchtigung des Fahrzeugaussehens.

Es ist auch bekannt, jedem Fahrzeugsitz einen höhenunveränderlich fest installierten Überrollbügel zuzuordnen. Diese Lösung wird typischerweise bei Sportwagen zur Unterstreichung des sportlichen Aussehens eingesetzt.

Weit verbreitet bei Cabriolets sind konstruktive Lösungen, bei denen der Überroiikörper im Normalzustand eingefahren ist, und im Gefahrenfall, also bei einem drohenden Überschlag, schnell in eine schützende Position ausgefahren wird, um zu verhindern, dass die Fahrzeuginsassen durch das sich überschlagende Fahrzeug erdrückt werden.

Von einem derartigen verfahrbaren Überrotikörper geht auch die Erfindung aus.

Diese Überrollschutzsysteme weisen typischerweise einen in einem fahrzeugfesten Führungskörper geführten U-förmigen oder aus einem Profilkörper gebildeten Überrollkörper, auf, wobei der Führungskörper in einem Kassetten-Gehäuse befestigt ist. Dieser Überrollkörper wird im Normalzustand gegen die Vorspannkraft einer Antriebs-Druckfeder durch eine Haltevorrichtung in einer unteren Ruhelage gehalten, und ist im Überschlagfall, sensorgesteuert unter Lösen der Haltevorrichtung, durch die Federkraft der Antriebs-Druckfeder in eine obere, schützende Stellung bringbar, wobei eine dann in Wirkeingriff tretende Verriegelungseinrichtung, die Wiedereinfahrsperre, ein Eindrücken des Überrollbügels verhindert. Dabei ist typischerweise jedem Fahrzeugsitz eine Kassette zugeordnet, insbesondere bei den vorderen Fahrzeugsitzen. Im Fond können die Kassetten auch in einer Rückwand-Baueinheit integriert sein.

Eine derartige Kassetten-Konstruktion eines Überrollbügelschutzsystems mit einem U-förmigen Überrollbügel zeigt beispielsweise die DE 43 42 400 A 1; eine alternative Kassettenkonstruktion mit einem Überrollkörper in Form eines Profilkörpers zeigt insbesondere die DE 198 38 989 C1.

Die vorgenannte Haltevorrichtung für die ausfahrbaren Überrollkörper besitzt typischerweise ein am Überrollkörper befestigtes Halteglied, das in lösbarer mechanischer Wirkverbindung mit einem Auslöseglied an einem fahrzeugfesten, sensorgesteuerten Auslösesystem, dem Aktuator, steht, der durch einen Auslösemagneten, den sogenannten Crashmagneten, oder durch ein pyrotechnisches Auslöseglied, gebildet ist. Das Halteglied ist bei zahlreichen Konstruktionen, z.B. gemäß DE 100 12 573 C1, als Haltebolzen ausgebildet, der z.B. über eine Wippe oder ein anderes, Toleranzen ausgleichendes, Verbindungselement mit dem Überrollkörper verbunden ist, und der mit einer das Auslöseglied bildenden Klinke des Aktuators, vorzugsweise eines Doppelklinken-Aktuators nach DE 197 50 693 C1, im lösbaren Wirkeingriff steht.

Bei einem derartigen Klinken-Haltesystem müssen zur Auslösung des Überrollkörpers nicht nur der Reibwiderstand zwischen Klinke und Haltebolzen, sondern auch Reibkräfte innerhalb des Auslösegliedes des Aktuators überwunden werden. Ferner besteht typbedingt bei Klinkensystemen die Gefahr des Zurückverriegelns. Hinzu kommt, dass die bekannte Haltevorrichtung relativ aufwändig ist, insbesondere was die Konstruktion des Haltegliedes und des Auslösegliedes mit Aktuator anbelangt, so dass diese Haltevorrichtung im besonderen Maße bei Fahrzeugen der gehobenen Klassen eingesetzt wird.

Aus der DE 199 60 764 A1 ist ein Überrollbügel für Kraftfahrzeuge bekannt geworden, bei dem das Ausfahren - anders als beim erfindungsgemäßen Überrollschutzsystem - durch einen pyrotechnischen Antrieb bewirkt wird, der auch zum Lösen der Haltevorrichtung benutzt wird. Dabei wird ein mechanisches Sperrglied gegen eine elastische Rückstellkraft verformt oder verschoben und der Antriebskolben für das Ausfahren des Überrollbügels freigegeben. Abgesehen von der Doppelfunktion des pyrotechnischen Antriebs geht die bekannte Vorrichtung nicht über das hinaus, was für pyrotechnische Auslöseglieder bekannt ist. Mechanische Sperrglieder müssen unter Überwindung von Rückstell- und Reibungskräften verformt oder verschoben werden, um den Überrollbügel zum Ausfahren freizugeben.

Die DE 102 03 710 C1 betrifft einen pyrotechnischen Aktuator mit einem Kolben als Stellglied, wie er seit langem als Auslösglied für die Freigabe eines Überrollbügels bekannt ist. Dabei treten die zuvor beschriebenen Nachteile auf.

Das gilt auch für den aus der EP 1 162 333 A1 bekannten pyrotechnischen Antrieb, der zur Freigabe eines Sicherungsbolzens dient.

Neben den pyrotechnischen Aktoren sind auch bereits pyrotechnische Trennelemente beschrieben worden, mit denen unter anderem Schraubverbindungen über Sollbruchstellen unter vorgegebenen Bedingungen zerstört bzw. aufgebrochen werden können. Aus der EP 1 443 296 A1 ist ein pyrotechnisches Trennelement mit einem Gehäuse und einem in das Gehäuse eingeschobenen Verrastbolzen bekannt geworden, wobei am Gehäuse ein erster Befestigungspunkt und am Verrastbolzen ein zweiter Befestigungspunkt angeordnet sind und der Verrastbolzen über ein Arretierungs- und Kraftbegrenzungselement am Gehäuse verankert ist. Das pyrotechnische Trennelement ist in eine Rohrschelle eingebaut, die im Bedarfsfall gelöst werden soll.

Der Erfindung liegt die Aufgabe zugrunde, die Haltevorrichtung eines Überrollschutzsystems so weiterzubilden, dass auf Sperrklinken und entsprechende Auslösevorrichtungen verzichtet werden kann und dass auf konstruktiv einfache Weise ein sicheres Halten und Auslösen gewährleistet werden kann.

Erfindungsgemäß wird diese Aufgabe dadurch gelöst, dass bei einem Überrollschutzsystem der eingangs genannten Art das Auslöseglied mit der zugehörigen pyrotechnischen Auslöseeinheit durch ein in sich abgeschlossenes, beim Auslösen sich selbst zerlegendes pyromechanisches Trennelement gebildet ist, das aus zwei miteinander kombinierten Teilen besteht, von denen das erste Teil einen elektrisch zündbaren pyrotechnischen Treibsatz enthält, und von denen das zweite Teil über einen Arretierungsring kraft- und formschlüssig trennbar mit dem ersten Teil in Verbindung steht, wobei das eine Teil fahrzeugfest angebracht ist und das andere Teil fest mit dem Halteglied verbunden ist.

Bei dem erfindungsgemäßen Haltesystem erfolgt das Niederhalten des Überrollkörpers direkt, d.h. ohne Zwischenglieder wie Klinken usw. indem ein pyrotechnisches Trennelement verwendet wird, das so ausgelegt ist, dass die Antriebs-Druckfeder unter allen normalen Betriebsbedingungen des Kraftfahrzeugs sicher gespannt gehalten werden kann, im Aktivierungsfall aber, d. h. unter dem Einfluss der Druckentwicklung des pyrotechnischen Auslösegliedes ein Lösen der Halterung erfolgt und der Überrollkörper in die Schutzstellung ausfahren kann. Zur Auslösung muss nur der Kraft- und Formschluss zwischen dem Arretierungsring und dem fahrzeugfesten Teil des Trennelementes überwunden werden. Bei einem derartigen Trennelement ist ein Zurückverriegeln wie bei Klinkensystemen absolut ausgeschlossen.

Ausgestaltungen und Weiterbildungen der Erfindung sind in Unteransprüchen gekennzeichnet sowie ergeben sich aus der Figurenbeschreibung.

Anhand eines in den Zeichnungen dargestellten Ausführungsbeispieles wird die Erfindung näher beschrieben.

Es zeigen:
- Fig. 1: in einer schematisierten Längsschnitt-Darstellung den Aufbau eines an sich bekannten Kassetten-Überrollschutzsystems mit aufstellbarem Überrollkörper und der erfindungsgemäßen Haltevorrichtung zum lösbaren Niederhalten des Überrollkörpers gegen die Vorspannkraft einer Antriebs-Druckfeder im Grundzustand,
- Fig. 2: in einer isometrischen Darstellung das Überrollschutzsystem nach Fig. 1, ebenfalls im gespannten Grundzustand, und
- Fig. 3: in zwei Figurenteilen A, B jeweils in einer Ausschnitt-Darstellung aus Fig. 1 den näheren Aufbau der erfindungsgemäßen Haltevorrichtung in zwei Betriebszuständen, mit dem gespannten Grundzustand im Figurenteil A und dem ausgelösten Zustand im Figurenteil B.

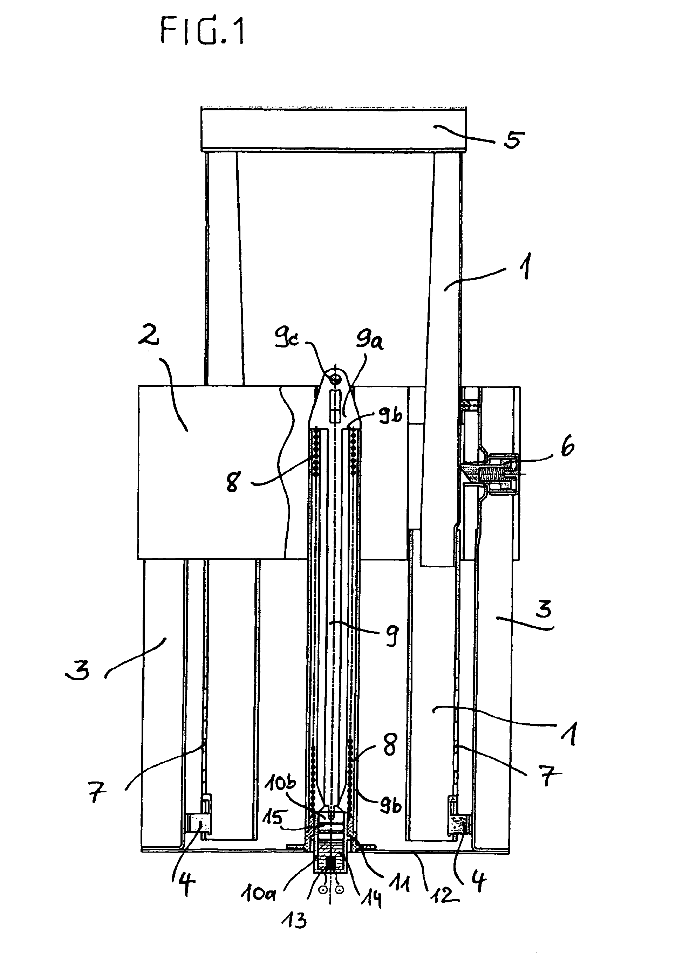

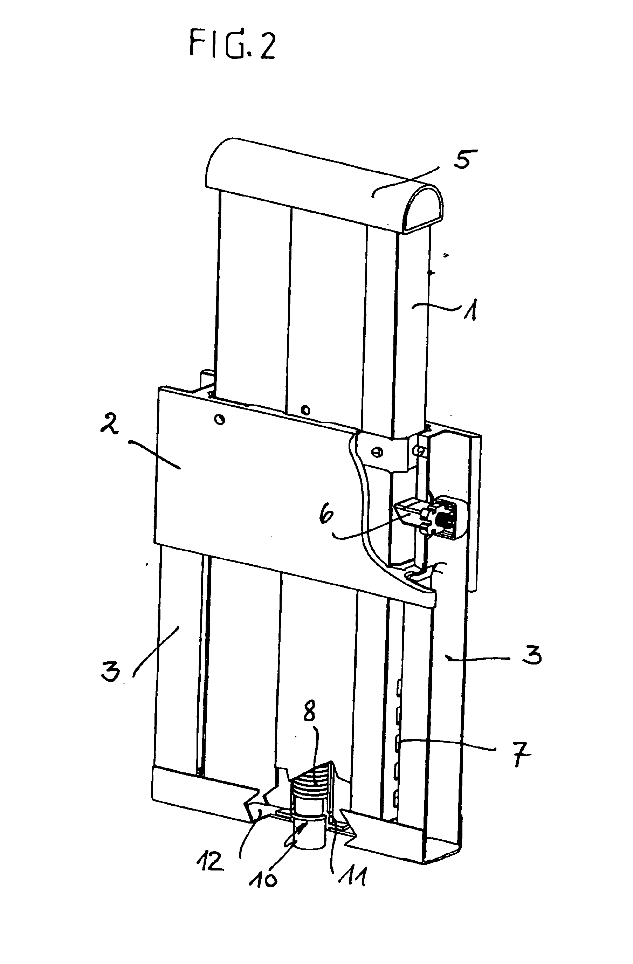

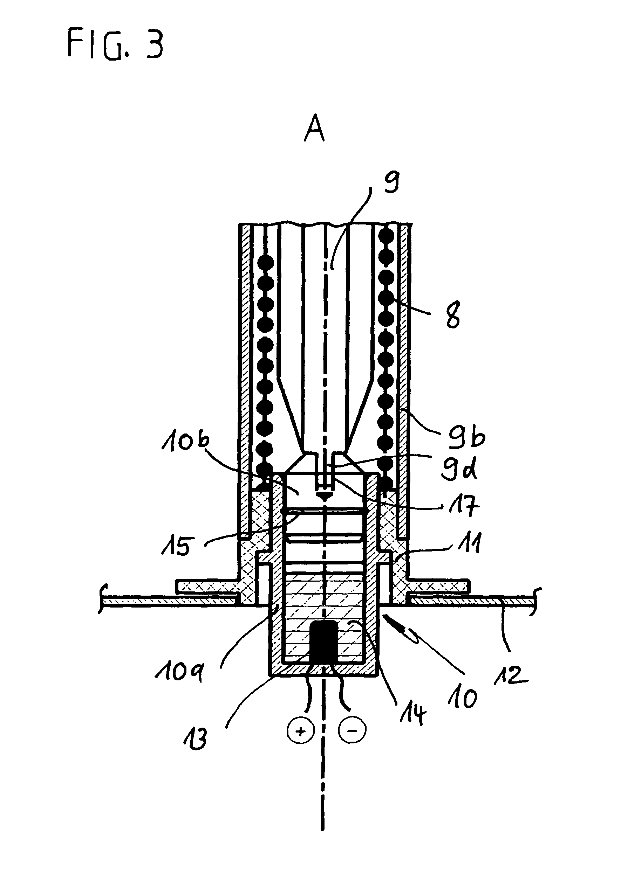

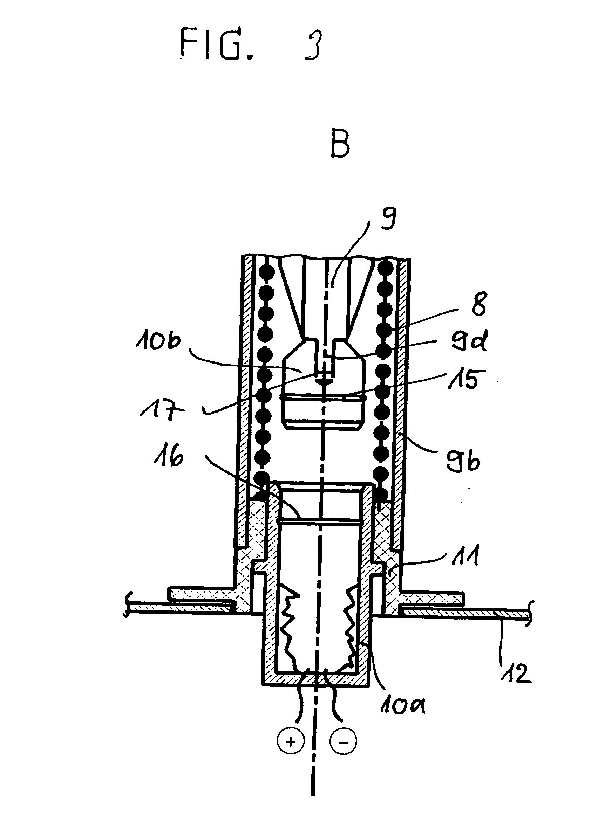

Die Figuren 1 - 3 zeigen in verschiedenen Ansichten und Betriebszuständen ein Überrollschutzsystem für Kraffahrzeuge, mit einem Überrollkörper 1 in Form eines breiten Profilkörpers, der in einer fahrzeugfesten, kassenförmigen Führung, bestehend aus einem, den Profilkörper des Überrollkörpers formschlüssig umgreifenden Führungsblock 2 und seitlichen Profilschienen 3, geführt aufgenommen ist, wobei zur Führung in den Profilschienen 3 am Überrollkörper seitlich Führungsglieder 4 angebracht sind. Am Profilkörper des Überrollkörpers 1 ist kopfseitig ein Überrollkopf 5, der ebenfalls aus einem Profilkörper besteht, angebracht. Dieser Überrollkopf 5 ist vorzugsweise so ausgebildet, daß er nach einem vorgegebenem Weg/Kraft-Diagramm deformierbar ist, um die direkt nach einem Überschlag zunächst auftretende Lastspitze durch eine gezielte Verformungsarbeit abzubauen, d.h. nicht in das System einzuleiten.

Im Führungsblock 2 ist an den Schmalseiten jeweils ein federvorgespanntes, linear quer zur Aufstellrichtung des Überrollkörpers 1 bewegliches Sperrglied 6 angebracht, das jeweils bei aufgestelltem Überrollkörper 1 in sperrende Wirkverbindung mit zugeordneten Zahnsegmenten 7 im unteren Teil der Schmalseiten des Überrollkörpers bringbar ist. Diese Sperrelemente 6 und 7 bilden die eingangs erläuterte Wiedereinfahrsperre, d.h. verhindern, daß bei einem Überschlag der aufgestellte Überrollkörper eingedrückt wird. Nicht dargestellte Mittel ermöglichen jedoch eine manuelle Entriegelung, um nach einer ungewollten Auslösung den Überrollkörper manuell reversieren zu können. Zum Aufstellen des Überrollkörpers 1 dient eine mittig angeordnete Antriebs-Druckfeder 8, die einen Federführungsbolzen 9 konzentrisch umgibt und außen von einem fahrzeugfesten Rohr 9 b umgeben ist. Die Antriebsdruckfeder 8 stützt sich dabei an einer umlaufenden Schulter des kopfseitigen Endes 9 a des Federführungsbolzens 9 ab.

Im Grundzustand (Figuren 1, 2 und 3A) ist der Überrollkörper 1 durch eine auslösbare Haltevorrichtung, die aus einem mit dem Überrollkörper verbundenen Halteglied und einem pyrotechnischen Aktuator mit Auslöseglied besteht, gegen die vorgespannte Antriebs-Druckfeder 8, auslösbar niedergehalten, wie im folgenden näher beschrieben wird.

Das bislang beschriebene Kassetten-Überrollschutzsystem ist dabei prinzipiell bekannt, z.B. durch die eingangs zitierte DE 198 38 989 C1. Die Erfindung bezieht sich auf die neuartige Ausbildung der Haltevorrichtung.

Die pyrotechnische Auslöseeinheit mit Auslöseglied der erfindungsgemäßen Haltevorrichtung besteht aus einem an sich bekannten pyromechanischen Trennelement 10, das sich aus zwei zylindrischen Teilen 10 a und 10 b zusammensetzt. Das erste Teil 10 a ist hohlzylindrisch ausgebildet und zusammen mit dem die Antriebs-Druckfeder einhüllenden Rohr 9 b mit einem rotationssymmetrischen Befestigungsglied 11 fahrzeugfest am Boden 12 der Kassette angebracht, wobei sich am Befestigungsglied auch die Antriebs-Druckfeder 8 abstützt. Das erste Teil nimmt einen über die sogenannte Zündpille 13 elektrisch zündbaren pyrotechnischen Treibsatz 14 auf. Über einen Arretierungsring 15 und eine dazu komplementäre Nut 16 im hohlzylindrischen ersten Teil 10 a ist ferner das zweite, als Massivzylinder ausgebildete Teil 10 b abtrennbar in dem ersten hohlzylindrischen Teil 10 a aufgenommen. Der Arretierungsring 15 besteht typischerweise aus einem O-Ring, der in einer entsprechenden umlaufenden Nut des zweiten Teiles 10 b eingelegt ist. Die Ausbildung und Anordnung des Arretierungsringes 15 ist dabei so getroffen, daß er durch die vorgespannte Antriebs-Druckfeder 8 bedingte Haltekräfte im Bereich von 200 - 500 N sicher aufnimmt.

Das Halteglied wird im dargestellten Ausführungsbeispiel durch den Federführungsbolzen 9 gebildet, der kopfseitig am Punkt 9 c am Überrollkörper 1 angelenkt und fußseitig im zweiten Teil 10 b des Trennelementes 10 verankert ist, z.B. durch eine Schraubverbindung, mit einem Gewindebolzen-Abschnitt 9 d am Federführungsbolzen und einem Sack-Gewindeloch 17 im Kopf des zweiten Trennelement-Teiles 10 b. Im Grundzustand wird der Federführungsbolzen 9 = Halteglied, und damit der Überrollkörper 1, gegen die Kraft der vorgespannten Druckfeder 8 niedergehalten. Das Überrollschutzsystem ist gespannt (Fig. 1 - 3A).

Wird sensorgesteuert im Fall eines drohenden Überschlages der pyrotechnische Treibsatz 14 über die Zündpille 13 elektrisch gezündet, entsteht ein kräftiger Druckimpuls, der das obere Trennelement-Teil 10 b von dem unteren Trennelement-Teil 10 a abtrennt. Die Antriebs-Druckfeder kann dann das Halteglied 9 mit dem Überrollkörper 1 ausfahren, wie es im Figurenteil 3 A dargestellt ist.

Es versteht sich, daß die Erfindung auch bei einem anderen als dem dargestellten Überrollschutzsystem Anwendung finden kann, insbesondere mit einem anderen Halteglied, einem anderen Überrollkörper und anderen Führungen des Überrollkörpers. Wesentlich ist stets, daß entweder das den Treibsatz enthaltende erste Trennelement-Teil 10 a fahrzeugfest angebracht ist, und das ausstoßbare zweite Trennelement-Teil 10 b mit dem Halteglied fest verbunden ist, oder umgekehrt.

### Bezugszeichenliste

- 1: Überrollkörper
- 2: Führungsblock
- 3: Seitliche Profilschienen
- 4: Führungsglieder
- 5: Überrollkopf
- 6: Sperrglied
- 7: Zahnsegment
- 8: Antriebs-Druckfeder
- 9: Federführungsbolzen + Halteglied
- 9 a: Schulter
- 9 b: Außenrohr
- 9 c: Anlenkpunkt
- 9 d: Gewindebolzen
- 10: Trennelement
- 10 a: erstes Trennelement-Teil
- 10 b: zweites Trennelement-Teil
- 11: Befestigungsglied
- 12: Kassetten-Boden
- 13: Zündpille
- 14: pyrotechnischer Treibsatz
- 15: Arretierungsring
- 16: Nut
- 17: Gewindesackloch

## Patentansprüche

1. Überrollschutzsystem für Kraftfahrzeuge, mit einem verfahrbar in einer fahrzeugfesten Führung (2, 3) gehalterten Überrollkörper (1), der im Normalzustand gegen die Kraft von mindestens einer vorgespannten Antriebs-Druckfeder (8) durch eine Haltevorrichtung in einer unteren, eingefahrenen Ruhelage haltbar ist, und unter Lösen der Haltevorrichtung durch die Federkraft der Antriebs-Druckfeder in eine verriegelte obere, schützende Stellung bringbar ist, wobei die Haltevorrichtung ein mit dem Überrollkörper verbundenes Halteglied und eine damit in lösbarer mechanischer Wirkverbindung stehende fahrzeugfeste, sensorgesteuerte pyrotechnische Auslöseeinheit mit einem Auslöseglied aufweist, **dadurch gekennzeichnet, dass** das Auslöseglied mit der zugehörigen pyrotechnischen Auslöseeinheit durch ein pyromechanisches Trennelement (10) gebildet ist, das aus zwei zu einem in sich abgeschlossenen, gesonderten Bauelement mechanisch miteinander verfügten und pyrotechnisch trennbaren Teilen besteht, von denen das erste Teil (10 a) einen elektrisch zündbaren pyrotechnischen Treibsatz (12, 13) enthält, und von denen das zweite Teil (10 b) über einen Arretierungsring (15) kraft- und formschlüssig trennbar mit dem ersten Teil (10 a) in Verbindung steht, wobei das eine Teil fahrzeugfest angebracht ist und das andere Teil fest mit dem Halteglied verbunden ist.

2. Überrollschutzsystem nach Anspruch 1, **dadurch gekennzeichnet, daß** der Arretierungsring (15) aus einem O-Ring besteht.

3. Überrollschutzsystem nach Anspruch 1 oder 2, **dadurch gekennzeichnet, daß** der Arretierungsring (15) so ausgelegt ist, daß er durch die vorgespannte Antriebs-Druckfeder (8) bedingte Haltekräfte im Bereich von 100 -1500 N vorzugsweise von 200 - 700 N, sicher aufnimmt.

4. Überrollschutzsystem nach einem der Ansprüche 1 bis 3, **dadurch gekennzeichnet, daß** das Halteglied durch einen Zugstab (9) gebildet ist, der mit einem Ende am Überrollkörper (1) und mit dem anderen Ende am Kopf des zweiten Teiles (10 b) des Trennelementes (10) verbunden ist.

5. Überrollschutzsystem nach Anspruch 4, **dadurch gekennzeichnet, daß** der Zugstab (9) zugleich als Federführungsbolzen für die Antriebs-Druckfeder (8) ausgebildet ist.

6. Überrollschutzsystem nach einem der Ansprüche 1 bis 5, mit einer kassettenartigen, fahrzeugfesten Führung, **dadurch gekennzeichnet, daß** der Überrollkörper (1) durch einen kassettenbreiten Profilkörper gebildet ist, der einmal in einem oberen Führungsblock (2) und zum anderen in länglichen, an den gegenüberliegenden Schmalseiten der Kassette angebrachten Profilschienen (3) geführt ist.

7. Überrollschutzsystem nach Anspruch 6, **dadurch gekennzeichnet, daß** an mindestens einer Schmalseite der Kassette und an der zugeordneten Schmalseite des Überrollkörpers (1) jeweils ein Sperrglied (6, 7) für eine Verriegelung des aufgestellten Überrollkörpers (1) vorgesehen ist.

## Claims

1. A roll-over protection system for motor vehicles, comprising a roll-over body (1) which is displaceably mounted in a guide (2, 3) fixed to the vehicle and which, in the normal state, is holdable in a lower, retracted, rest position by a holding device against the force of at least one biassed driving compression spring (8), and is movable into a locked, upper, protecting position by the spring force of the driving compression spring upon release of the holding device, wherein the holding device comprises a holding member connected to the roll-over body, and a sensor-controlled, pyrotechnic release unit which is provided with a release member, is fixed to the vehicle and is detachably mechanically connected to the holding member, **characterised in that** the release member with the associated pyrotechnic release unit is formed by a pyromechanical separating component (10) consisting of two pyrotechnically separable parts which are mechanically joined together to form a closed, separate, structural component and of which the first part (10a) contains an electrically ignitable pyrotechnic propellant charge (12, 13), and the second part (10b) is detachably connected to the first part (10a) in an interference- and form-fitting manner by a retaining ring (15), wherein the one part is fixed to the vehicle and the other part is fixedly connected to the holding member.

2. A roll-over protection system according to claim 1, **characterised in that** the retaining ring (15) is formed from an O ring.

3. A roll-over protection system according to claim 1 or 2, **characterised in that** the retaining ring (15) is designed so that it reliably absorbs holding forces which are exerted by the biassed driving compression spring (8) and lie in the range from 100-1500 N, preferably 200-700 N.

4. A roll-over protection system according to any one of claims 1 to 3, **characterised in that** the holding member is formed by a tie rod (9) which is connected at one end to the roll-over body (1) and at the other end to the head of the second part (10b) of the separating component (10).

5. A roll-over protection system according to claim 4, **characterised in that** the tie rod (9) is simultaneously formed as a spring guiding bolt for the driving compression spring (8).

6. A roll-over protection system according to any one of claims 1 to 5, with a cassette-type guide fixed to the vehicle, **characterised in that** the roll-over body (1) is formed by a profiled body which is the width of the cassette and which on the one hand is guided in an upper guide block (2) and on the other hand is guided in elongate profiled rails (3) mounted on the opposing narrow sides of the cassette.

7. A roll-over protection system according to claim 6, **characterised in that,** on at least one narrow side of the cassette and on the associated narrow side of the roll-over body (1), a respective locking member (6, 7) for locking the raised roll-over body (1) is provided.

## Revendications

1. Système d'arceau de sécurité pour véhicules automobiles avec un arceau (1) retenu de manière déplaçable dans une glissière de guidage (2, 3) fixée au véhicule, lequel arceau, à l'état normal, peut être retenu dans une position de repos inférieure rentrée contre la force d'au moins un ressort de pression de commande précontraint (8) à l'aide d'un dispositif de fixation et, en desserrant le dispositif de fixation, l'arceau peut être amené dans une position supérieure verrouillée de protection par la force de ressort du ressort de pression de commande, le dispositif de fixation comportant un organe de retenue relié à l'arceau et en liaison mécanique active détachable avec celui-ci, une unité de déclenchement pyrotechnique commandée par détecteur, fixée au véhicule, avec un organe de déclenchement, **caractérisé en ce que** l'organe de déclenchement avec l'unité de déclenchement pyrotechnique associée est formé par un élément séparateur pyromécanique (10) qui est constitué par deux parties jointes mécaniquement l'une avec l'autre et pyrotechniquement séparables formant un élément de construction séparé autonome, dont la première partie (10a) renferme un bloc de poudre pyrotechnique à allumage électrique (12, 13) et la seconde partie (10b) est reliée par ajustement serré de manière séparable à la première partie (10a) au moyen d'une bague d'arrêt (15), une partie étant montée fixement sur le véhicule et l'autre partie étant reliée fixement à l'organe de retenue.

2. Système d'arceau de sécurité selon la revendication 1, **caractérisé en ce que** la bague d'arrêt (15) est constituée par un joint torique.

3. Système d'arceau de sécurité selon la revendication 1 ou 2, **caractérisé en ce que** la bague d'arrêt (15) est conçue de telle manière qu'elle absorbe de manière sûre des forces de retenue générées par le ressort de pression de commande précontraint (8) dans la plage comprise entre 100 N et 1500 N, de préférence entre 200 N et 700 N.

4. Système d'arceau de sécurité selon l'une quelconque des revendications 1 à 3, **caractérisé en ce que** l'organe de retenue est formé par une barre de traction (9) qui est reliée, à une extrémité, à l'arceau (1) et, à l'autre extrémité, à la tête de la seconde partie (10b) de l'élément séparateur (10).

5. Système d'arceau de sécurité selon la revendication 4, **caractérisé en ce que** la barre de traction (9) est réalisée en même temps sous forme de broche de guidage de ressort pour le ressort de pression de commande (8).

6. Système d'arceau de sécurité selon l'une quelconque des revendications 1 à 5, avec une glissière de guidage en forme de caisson fixée au véhicule, **caractérisé en ce que** l'arceau (1) est constitué par un corps profilé de la largeur du caisson qui est guidé, d'une part, dans un bloc de guidage supérieur (2) et, d'autre part, dans des rails profilés allongés (3) montés sur les côtés étroits opposés du caisson.

7. Système d'arceau de sécurité selon la revendication 6, **caractérisé en ce que,** sur au moins un côté étroit du caisson et sur le côté étroit correspondant de l'arceau (1), il est prévu un organe de blocage (6, 7) pour un verrouillage de l'arceau installé (1).
